# EUROPEAN PATENT SPECIFICATION

(11) **EP 3 023 768 B1**
(45) Date of publication and mention of the grant of the patent: **04.03.2020**
(21) Application number: 14194282.1
(22) Date of filing: 21.11.2014
(51) Int. Cl.: G01N 21/15, G01N 21/51, G01N 21/53

(54) **A nephelometric turbidimeter and method for controlling the humidity of venting air in a nephelometric turbidimeter**
Nephelometrisches Turbidimeter und Verfahren zum Regeln der Feuchtigkeit von Abluft in einem nephelometrischen Turbidimeter
Turbidimètre néphélométrique et procédé de régulation de l'humidité de l'air de ventilation dans un turbidimètre néphélométrique

(43) Date of publication of application: 25.05.2016
(73) Proprietor: Hach Lange GmbH, 14163 Berlin (DE)
(72) Inventor: Battefeld, Manfred, 40211 Düsseldorf (DE); Kumpch, Hans Joachim, 12207 Berlin (DE); Leyer, Axel, 41199 Mönchengladbach (DE); de Heij, Bas, 41542 Dormagen (DE); Hanschke, Clemens, 14167 Berlin (DE); Küppers, Michael, 41564 Kaarst (DE); Jonak, Andreas, 40670 Meerbusch (DE); Fricke, Eik, 10409 Berlin (DE); Rudde, Heinz, 41836 Hückelhoven (DE); Hahn, Markus, 47906 Kempen (DE); Lenhard, Markus, 41751 Viersen (DE); Uthemann, Rolf, 51375 Leverkusen (DE); Minke, Sebastian, 47802 Krefeld (DE); Golitz, Andreas, 47445 Moers (DE); Gassner, Bernd, 41469 Neuss (DE); Steinhauer, Frank, 12305 Berlin (DE); Heidemanns, Lothar, 41352 Korschenbroich (DE); Mitreiter, Andreas, 14532 Keinmachnow (DE)
(74) Representative: terpatent Patentanwälte ter Smitten Eberlein-Van Hoof Rütten Daubert

(56) References cited:
- EP-A1- 2 487 480
- WO-A1-2014/183778
- DE-A1-102005 027 087
- JP-A- H0 416 745
- JP-A- 2000 111 545
- JP-A- 2006 153 739
- JP-A- 2006 337 106
- KR-B1- 100 896 044
- US-A- 4 600 416
- US-A- 5 446 544
- US-A1- 2008 155 946
- US-A1- 2013 112 896
- US-B1- 6 395 073
- Cody Hostick: "Moisture Protection Of Electronics", Maintenance Technology, 18 September 2013 (2013-09-18), XP55213702, Retrieved from the Internet: URL:https://www.maintenancetechnology.com/ 2013/09/moisture-protection-of-electronics / [retrieved on 2015-09-16]
- Anonymous: "Desiccant Chart Comparisons - SorbentSystems.com", , 1 January 2006 (2006-01-01), XP55612402, Retrieved from the Internet: URL:https://www.sorbentsystems.com/desicca nts_charts.html [retrieved on 2019-08-12]

## Description

The present invention refers to a nephelometric turbidimeter for measuring the turbidity of a liquid sample in a transparent sample cuvette.

A nephelometric turbidimeter determines the concentration of solid particles suspended in a liquid sample within a sample cuvette by projecting a measurement light beam into the liquid sample within the cuvette. An optical turbidity sensor which is provided outside the cuvette body detects the amount of light scattered by the suspended solid particles at an angle of typically 90° with respect to the light beam axis.

If condensate is provided at the outside surface of the cuvette body, the light signal received by the measurement sensor is scattered by the condensation on the cuvette body so that the true turbidity of the liquid sample cannot be determined anymore. Additionally, the condensate at the cuvette body can result in water drops dropping downwardly from the cuvette body causing optical and/or electronic disturbances and damages at the optics and/or electronics of the turbidimeter.

Condensation on the outside of the cuvette body and on the other parts of the turbidimeter appears in particular if the liquid sample is colder than the air in the cuvette chamber wherein the cuvette is arranged during the turbidity measurement process and if the relative humidity of the air inside the cuvette chamber is high. Condensation could be avoided if the cuvette chamber would be heated by a heating device but a heating device causes a high consumption of electric energy.

US 544 654 4 discloses a turbidimeter with a drying body arranged at the drying path. The airflow passes by a membrane which separates the air flow from a drying body defined by a desiccant.

JP 2006 337 106 discloses a turbidimeter with a condensation unit for drying air which is circulating in a drying air circuit.

JP 2006 153 739 discloses an optical water quality measuring device with two separate drying air circuits with a drying body being arranged in the drying path, respectively.

JP 2000 111 545 discloses a water quality measuring instrument with a fan and heater for generating heated air for avoiding or removing condensation at an optical device.

It is an object of the invention to provide a nephelometric turbidimeter with an effective and simple means for avoiding condensation in the turbidimeter.

This object is solved with a nephelometric turbidimeter with the features of claim 1 and with a method for controlling the humidity of venting air in a nephelometric turbidimeter with the features of claim 15.

According to the invention, the nephelometric turbidimeter is provided with a transparent sample cuvette comprising the liquid sample. The sample cuvette is arranged within a cuvette chamber defined by a cuvette chamber housing. The cuvette chamber housing optically encloses the cuvette chamber to thereby shield the cuvette chamber against any environmental light within the cuvette chamber. Additionally, the cuvette chamber housing avoids a continuous exchange of air between the turbidimeter environment and the cuvette chamber.

The nephelometric turbidimeter according to the invention is preferably a process device so that the liquid sample within the sample cuvette is continuously exchanged. The sample cuvette has, more or less, the temperature of the water sample flowing through the sample cuvette. As a consequence, the sample cuvette and other parts, as for example the cuvette chamber housing, can have a temperature significantly below the temperature of the air within the cuvette chamber housing.

The turbidimeter is provided with a drying apparatus which comprises a fluidic cuvette chamber inlet opening for venting of the cuvette chamber and a fluidic cuvette chamber outlet opening for de-venting the cuvette chamber. The cuvette chamber inlet opening and the cuvette chamber outlet opening are connected with each other outside the cuvette chamber by a drying path. An air circulator, e.g. a drying pump is provided in the drying path for circulating or pumping air from the cuvette chamber outlet opening to the cuvette chamber inlet opening. Other circulating means, such as a fan, may also be employed to circulate. Additionally, a drying body for drying air is arranged in the drying path between the cuvette chamber outlet opening and the cuvette chamber inlet opening. The drying body is a container of molecular sieve selected for its ability to bind water vapor.

As a result, the turbidimeter is provided with an active drying apparatus which allows continuous drying of the air in the cuvette chamber housing to a humidity level which guarantees that no condensation can appear within the cuvette chamber at the sample cuvette or at other parts of the turbidimeter, even if the temperature difference between the liquid sample and the air within the cuvette chamber housing is relatively high. Since condensation is avoided, also water drops which could cause serious problems and damages at the optics and/or electronics, are avoided.

By drying the air volume within the turbidimeter, humidity is extracted from the air so that the pressure within the complete turbidimeter air volume thereby decreases. In other words, the drying of the air within the turbidimeter air volume causes underpressure so that environmental air flows into the turbidimeter air volume through sealings, slits and even through housing parts made out of plastic. Only with the active and quasi-continuous working drying apparatus it is possible to continuously extract the air humidity which is continuously charged Into the turbidimeter air volume. Thus, the air humidity of the turbidimeter air volume will be maintained at an equilibrium humidity value.

The drying apparatus comprises a disposable drying cartridge including the drying body. The drying cartridge is provided with a drying cartridge housing and with fluidic coupling elements.

According to a preferred embodiment of the invention, the drying apparatus is provided with a humidity sensor being arranged in the drying path. The humidity sensor can be a sensor for sensing the absolute humidity or the relative humidity. The humidity sensor is controlled by a control unit which also controls the air circulator or the drying pump. The humidity sensor allows control of the activity of the air circulator or the drying pump so as to control the relative or absolute humidity of the venting air to a static or to a dynamic air humidity set value.

According to a preferred embodiment of the invention, the drying apparatus is provided with a temperature sensor arranged in the drying path to sense the temperature of the venting air passing by. The temperature sensor is controlled by a control unit which also controls the air circulator or the drying pump. The temperature sensor allows control of the activity of the air circulator/drying pump so as to control the pumping performance depending on the air temperature. Since the absolute humidity capacity of air significantly depends on the air temperature, the pumping performance of the drying pump and/or the drying performance of the drying apparatus can be controlled dependent upon the air temperature. The temperature sensor also allows a rough estimation of the temperature of the liquid sample in the sample cuvette, if the air circulator/drying pump is stopped for a couple of minutes so that the temperature of the air within the cuvette chamber adapts to the sample cuvette temperature. The air from the cuvette chamber is then pumped by the drying pump to the temperature sensor so that the temperature sensor detects the air temperature which allows to infer the temperature of the sample cuvette and the liquid sample therein. Thus a temperature sensor within the flowing path of the liquid sample can be avoided. If also a humidity sensor is provided, the pumping performance can be controlled by the control unit dependent on the air humidity and the air temperature.

According to another preferred embodiment of the invention, the drying apparatus of the turbidimeter comprises an optical condensation detector which detects condensation on the outside of the sample cuvette. The condensation detector can, for example, comprise a light source directing light to the cuvette body and a light detector detecting the light source light being reflected by the cuvette body. If the reflected light is not within a defined intensity range, the control unit notifies that condensation is present at the cuvette body. With the condensation detector a more adaptive measuring and drying procedure controlled by the control unit can be realized.

If condensation is detected, no turbidity measurement is provided and the drying performance of the drying apparatus is increased until no condensation is detected anymore. If a humidity sensor and/or a temperature sensor is also provided in the drying path, a dynamic air humidity set value can be calculated wherein the air humidity, the air temperature and the condensation tendency or the condensation time after stopping the drying pump can be used to determine a rough estimation of the dewpoint and of the liquid sample temperature within the sample cuvette.

Preferably, the cuvette chamber housing is surrounded by an optics chamber housing enclosing an optics chamber comprising optic elements. The optics chamber housing is provided with an optics chamber inlet opening which is fluidically arranged downstream of the drying pump. The cuvette chamber and the optics chamber are arranged preferably fluidically in-line, and not in parallel to each other. The air is preferably first pumped into the optics chamber housing and from the optics chamber housing Into the cuvette chamber. By including the optics chamber into the drying circuit, also the air within the optics chamber is kept so dry that no condensation can appear at the optical elements inside the optics chamber.

Preferably, the drying cartridge is provided with a U-shaped cartridge housing with two substantially parallel legs and a cross portion connecting the parallel legs. An internal air inlet opening and an internal air outlet opening are provided at the end portions of the legs, respectively. One or both of the openings can be defined by an end opening of a tube leading to or from said opening to the outside of the cartridge housing. The U-shaped cartridge is compact and provides a long internal flow path. The internal tube allows to use a long internal air flow path through the cartridge housing from one leg end portion to the other leg end portion and to provide the coupling elements for coupling the cartridge to the drying apparatus not at the leg end portions.

Preferably, the drying body is provided with an internal inlet opening arranged in a vertically low drying body portion and with an internal outlet opening arranged in a vertically high drying body portion. The air flows through the drying body from the bottom to the top. The drying body is preferably a molecular sieve which may include undesirable dust particles. Due to gravity, the dust particulates generally sink downwardly and are concentrated in the low portion of the drying body. Therefore, it is advantageous to minimize the discharge of dust into the drying path by directing the airflow from the bottom to the top of the drying body.

According to a preferred embodiment of the invention, a dust filter is provided downstream of and adjacent to the drying body. The dust filter filters the dust particles coming from the drying body. The dust filter makes sure that no dust particulates are pumped into the cuvette chamber and/or into the optics chamber.

Preferably, the drying apparatus comprises a separate buffer drying means within a space which is fluidically connected to the cuvette chamber. The buffer drying means is a passive drying means, which is not arranged in the drying path between the cuvette chamber outlet opening and the cuvette chamber inlet opening, but is arranged close or even within the cuvette chamber and/or the optics chamber. The buffer drying substance can be silica gel or any other suitable passive drying substance that is hygroscopic in nature. This buffer drying means is passive because it is not directly in the air flow path. If the active drying circuit is not working, for example because of a defective drying pump or because of a general power loss, the passive buffer drying means can absorb humidity at least for a couple of hours or a couple of days to thereby avoid condensation and/or accumulation of water drops within the turbidimeter.

According to a preferred embodiment of the invention, the cuvette chamber inlet opening is closed by an inlet membrane which is permeable for air and is impermeable to liquid water. The inlet membrane allows the venting air to flow into the cuvette chamber and prevents water drops from dropping through the cuvette chamber inlet opening into the other parts of the turbidimeter.

Preferably, the cuvette chamber outlet opening is closed by an outlet membrane which is permeable for air and is impermeable for liquid water. The outlet membrane has generally the same function as the inlet membrane, i.e. preventing liquid water and water drops running into the other parts of the turbidimeter.

According to a preferred embodiment of the invention, the sample cuvette is cylindrical in shape, and a measurement source is provided to generate a measurement beam which is axially directed to the sample cuvette through a window at the bottom wall of the chamber housing to the bottom wall of the sample cuvette. The cuvette chamber inlet opening or a plurality of cuvette chamber inlet openings are provided at the chamber housing bottom wall, preferably arranged around the window at the chamber housing bottom wall.

The method for controlling the humidity of the venting air in a nephelometric turbidimeter for measuring a turbidity of a liquid sample in a transparent sample cuvette according to claim 15 is directed to a nephelometric turbidimeter as defined in claim 1 and including a humidity sensor being arranged in the drying path as in claim 2 and a control unit for controlling the venting air humidity. According to the method provided by the control unit, the activity of the air circulator/drying pump is continuously controlled dependent on the air humidity detected by the humidity sensor to regulate the air humidity to an air humidity set value. In other words, the drying apparatus including the air circulator/drying pump is only active if the detected air humidity value is above the air humidity set value. The drying circuit is only active if necessary. As a result, the capacity of the drying body is used effectively and the energy consumption for driving the air circulator/drying pump and the wearing of the air circulator/drying pump is reduced.

Preferably, the drying apparatus comprises a temperature sensor which is arranged in the drying path. The control unit continuously controls the activity of the drying pump dependent on the air humidity detected by the humidity sensor and on the air temperature detected by the temperature sensor to regulate the relative air humidity to a relative air humidity set value. The control of the relative air humidity allows a more sophisticated control and a more efficient use of the drying resources, in particular of the capacity of the drying body.

Preferably, the turbidimeter is provided with a measurement light source generating a measurement beam which is directed to the liquid sample within the sample cuvette. The turbidimeter is also provided with an optical turbidity sensor which receives light being scattered by the liquid sample.

The method comprises the method steps:
During the pump-stop interval: Stopping the air circulator/drying pump and periodically measuring the light intensity received by the turbidity sensor;
During the pumping interval: Starting the air circulator/drying pump and periodically measuring the light intensity received by the turbidity sensor; and
Calculating the absolute air humidity set value (H) or the relative air humidity set value (RH) on the basis of the temporal course of the intensity values detected by the turbidity sensor during the pump was stopped and was active. The calculation can be a based on a mathematic function but can alternatively be based on a look-up table.

Preferably, the air circulator/pump circulating or pumping the liquid sample into the cuvette is stopped during the two condensation measurement intervals.

It is assumed that the change in the light intensity received by the turbidity sensor during the first interval while the air circulator/drying pump is stopped, does not result from a variation from the liquid turbidity but can only be the result of an increasing condensation on the outside of the transparent cuvette.

During the first condensation measurement interval, when the air circulator/drying pump is stopped, a change of the signal received by the turbidity sensor is assumed to be caused by increasing condensation on the outside of the cuvette. The first interval can be of constant duration or can be stopped after a defined relative change of the light intensity received by the turbidity sensor. After the first measurement interval, the drying pump is activated and the light intensity received by the turbidity sensor is periodically detected for a defined time interval or until a defined relative change rate has been reached or until an absolute light intensity is exceeded.

When the air circulator/drying pump is stopped at the beginning and during the first interval, the condensation at the cuvette outside increases if the temperature of the liquid sample is colder than the air in the cuvette chamber and if the dew point of the cuvette chamber air is reached during the first interval. The relative change of the intensity signal received by the turbidity sensor and the temporal course of the light intensity values are therefore an indication for the temperature of the liquid sample in relation to the temperature and of the humidity of fresh air in the cuvette chamber.

During the second interval, the condensation on the cuvette is vented-away, so that the course of the light intensity received by the turbidity sensor is again an indicator for the temperature difference between the air and the liquid sample.

The control unit calculates on the basis of the course of the intensity values during the first and the second interval and of the temperature of the air in the venting path a new absolute air humidity set value or a new relative air humidity set value. With this apparatus and method, a set value for the absolute or relative air humidity can be determined without additional complexity of the turbidimeter.

Alternatively, the drying apparatus comprises an optical condensation sensor which detects condensation on the outside surface of the sample cuvette. The optical condensation sensor allows to calculate an air humidity set value or a relative air humidity set value to regulate the venting intervals with the following method steps:
Stopping the air circulator/drying pump and measuring the condensation time until the condensation sensor detects condensation at the cuvette surface after the stopping of the drying pump. As soon as condensation is detected by the condensation sensor, the air humidity is detected by the humidity sensor and the air temperature is detected by the temperature sensor. This can, for example, be realized by a short activation of the air circulator/drying pump to pump a part of the air volume from the cuvette chamber to the humidity sensor and the temperature sensor. The measured humidity value and the measured temperature is/are indicators for the temperature of the sample cuvette and the liquid sample in the sample cuvette. These values are also indicators for the grade of gas leakage of the cuvette chamber housing and therefore for the grade of humidity entry into the cuvette chamber. The control unit calculates an air humidity set value on the basis of these measurement values so that the controlled air humidity within the air volume remains always sufficiently distant from the actual dewpoint.

This allows a very efficient use of the drying capacity of the drying body because the humidity set value is not set to an absolute minimum humidity set value but is always adapted to the physical circumstances. The venting air is only dried as much as it is necessary to avoid condensation within the cuvette chamber and/or within the optics chamber.

One embodiment of the invention is described with reference to the enclosed drawings, wherein
figure 1 shows schematically a nephelometric turbidimeter with a drying apparatus, and
figure 2 shows a drying body provided as a drying cartridge of the turbidimeter of figure 1.

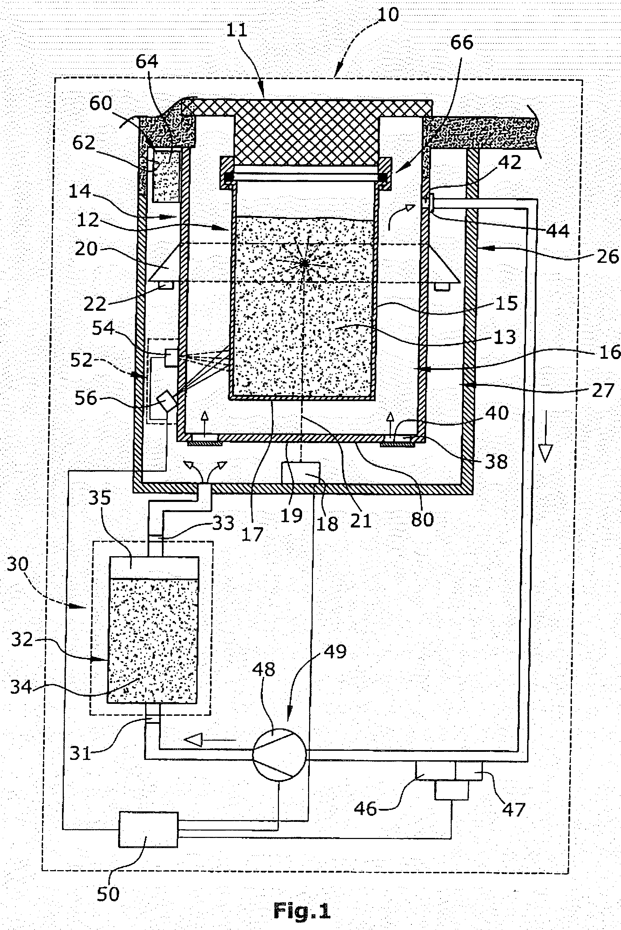

Figure 1 shows schematically a turbidimeter 10 for measuring the turbidity of a liquid sample 13 in a transparent and cylindrical sample cuvette 12 preferably made out of glass. The present turbidimeter 10 is a so-called process device but not a so-called laboratory device although the embodiments described herein are also applicable to high-humidity lab devices. The turbidimeter 10 is therefore provided with an sample transport arrangement comprising a sample inlet and a sample outlet at the cuvette 12 which is not shown in the figures. The liquid sample 13 is continuously or non-continuously pumped through the sample cuvette 12 to continuously or non-continuously exchange the sample 13 in the sample cuvette 12.

The turbidity of a liquid is an indication of the concentration of solid particles suspended in the liquid sample 13. The turbidity is determined by projecting a measurement light beam 21 emitted by a light source 18 into the liquid sample 13 and by measuring the light intensity of the light scattered by the liquid sample 13 at an angle of 90° with respect to the measurement light beam's 21 longitudinal axis within the liquid sample 13. The turbidimeter 10 is provided with a ring-like optical element 20 which is a ring-prism directing the collected scattered light to an optical turbidity sensor 22 which is circular.

The turbidimeter 10 is provided with an optically closed cuvette chamber 16 defined by a cup-like cuvette chamber housing 14 including a cuvette chamber cover 11. The chamber cover 11 holds the sample cuvette 12 releasably mounted to the chamber cover 11 by a threaded fixation ring 66. The cuvette chamber housing 14 is provided with a plane bottom wall 80 with a central optical window 19 which is transmissive for the measurement beam 21. The bottom wall 80 is also provided with numerous cuvette chamber inlet openings 38 which are arranged around the central optical window 19. All cuvette chamber inlet openings 38 are covered and optically closed by an inlet membrane 40, respectively. The inlet membrane 40 can be a membrane made of black-colored PTFE such as GORE-TEX™ and is permeable for air and is impermeable for liquid water. At the top of the cuvette chamber housing 14 a lateral cuvette chamber outlet opening 42 is provided through which air can flow out of the cuvette chamber 16. The cuvette chamber outlet opening 42 is provided with an outlet membrane 44 which can be a coarse filter, but also can be a PTFE membrane.

Outside the cuvette chamber housing 14 an optical condensation sensor 52 is provided comprising a light emitter 56 and a light detector 54 both orientated to the outside surface 15 of the cylindrical portion of the sample cuvette 12. The cuvette chamber housing 14 is provided with additional light-transmissive windows corresponding to the ring-like optic element 20 and to the condensation sensor 52.

The cuvette chamber housing 14 is enclosed by a cup-shaped optics chamber housing 26 defining a cup-shaped optics chamber 27 between the optics chamber housing 26 and the cuvette chamber housing 14. The measurement light source 18, the ring-like optic element 20, the turbidity sensor 22 and the condensation sensor 52 are arranged within the optics chamber 27. In an upper portion 62 of the optics chamber 27 a passive drying means 60 is arranged. The drying means 60 is defined by several cushions of silica gel as a drying substance 64.

The drying path between the cuvette chamber outlet opening 42 and an optics chamber inlet opening 28 of the optics chamber housing 26 comprises an air circulator 49 which in this embodiment is a drying pump 48, e.g. a membrane pump, and a drying cartridge 30 comprising a drying body 32 defined by a drying substance 34 which is a molecular sieve. The drying path also comprises a humidity sensor 46 and a temperature sensor 47 which can be realized as one single sensor array. The turbidimeter 10 is provided with a control unit 50 which electronically and electrically controls the sensors 46, 47, the drying pump 48, the light source 18, the condensation sensor 52 and the turbidity sensor 22.

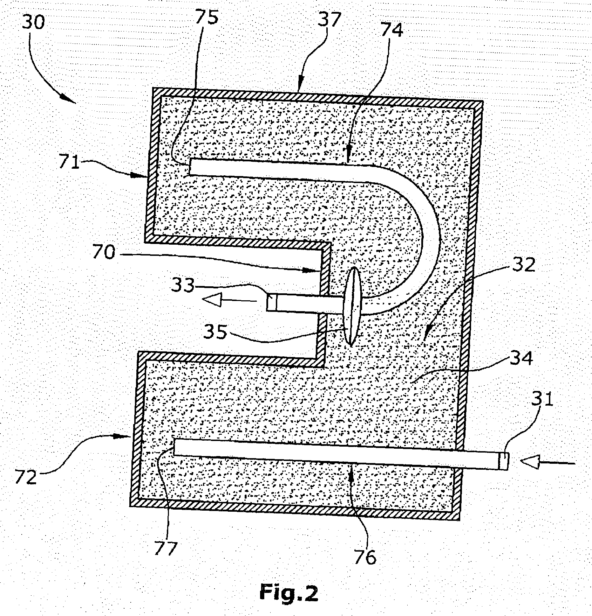

The drying cartridge 30 is shown in more detail in figure 2. The drying cartridge 30 is provided with a U-shaped cartridge housing 37 defining two substantially parallel legs 71, 72 and a cross portion 70 connecting the legs 71, 72. The cartridge housing legs 71, 72 lie in a horizontal plane whereas the cross portion 70 is orientated vertically. The drying cartridge 30 also comprises an inlet tube 76 with an internal inlet opening 77 at the end portion of the bottom leg 72 and with an coupling element 31 outside the cartridge housing 37. The drying cartridge 30 also comprises and outlets tube 74 with an internal inlet opening at the end portion of the top leg 71 and with a coupling element 33 outside the cartridge housing 37. The outlet tube 74 is also provided with a dust filter 35.

The control unit 50 is provided with an electronic memory wherein a humidity set value H and/or a relative humidity set value RH is memorized. The control unit controls the activity of the drying pump 48 dependent on the humidity value h and the temperature value t detected by the humidity sensor 46 and the temperature sensor 47 to keep the humidity at the respective set value H,RH. The control unit 50 periodically stops the humidity control to perform a calibration cycle. The calibration cycle starts with stopping the drying pump 48 so that the temperature of the air inside the cuvette chamber 16 is adapted to the temperature of the sample 13. If, before the temperature adaption, the sample 13 is much colder than the air in the cuvette chamber 16, condensation at the outside surface 15 of the sample cuvette 12 will appear after a while. The condensation sensor 52 detects the condensation and the condensation detection is registered by the control unit 50. The time t between stopping the driving pump 48 and the detection of condensation is the condensation duration d. The control unit 15 now activates the drying pump 48 to pump a small air volume from the cuvette chamber 16 to the sensors 46, 47 to immediately determine the humidity h and the temperature t of this air volume. The control unit 50 then calculates a new air humidity set value H or relative air humidity set value RH on the basis of the condensation duration, the air temperature t and the air humidity h just measured. The calculation of the new set values can be based on a mathematic function or can be based on the use of a complex look-up table.

The control unit 50 then continues to control the air humidity or the relative air humidity on the basis of the new set value H,RH.

## Claims

1. A nephelometric turbidimeter (10) for measuring a turbidity of a liquid sample (13) in a transparent sample cuvette (12), the turbidimeter (10) comprising
a cuvette chamber (16) defined by a cuvette chamber housing (14) for locating the sample cuvette (12), and
a drying apparatus comprising:
a cuvette chamber inlet opening (38) for venting the cuvette chamber (16) and a cuvette chamber outlet opening (42) for de-venting the cuvette chamber (16), wherein the cuvette chamber inlet opening (38) and the cuvette chamber outlet opening (42) are connected with each other outside the cuvette chamber by a drying path,
an air circulator (49) for circulating air from the outlet opening (42) to the inlet opening (38), and
a drying body (32) defined by a drying substance (34) which is a molecular sieve in line arranged in the drying path between the outlet opening (42) and the inlet opening (38),
wherein the drying apparatus comprises a disposable drying cartridge (30) including the drying body (32), and
wherein the drying cartridge is provided with a cartridge housing (37) and with fluidic coupling elements (31,33), which allow a quick engagement and disengagement of the cartridge housing with or from the drying circuit of the turbidimeter.

2. The nephelometric turbidimeter (10) of claim 1, wherein the drying apparatus is provided with a humidity sensor (46) being arranged in the drying path.

3. The nephelometric turbidimeter (10) of one of the preceding claims, wherein the drying apparatus is provided with a temperature sensor (47) being arranged at the drying path.

4. The nephelometric turbidimeter (10) of one of the preceding claims, wherein the drying apparatus comprises an optical condensation detector (52) which detects condensation on the outside surface (15) of the sample cuvette (12).

5. The nephelometric turbidimeter (10) of one of the preceding claims, wherein the cuvette chamber housing (14) is surrounded by an optics chamber housing (26) enclosing an optics chamber (27) comprising optic elements (18, 20) and the optics chamber housing (26) is provided with an optics chamber inlet opening (28) which is fluidically arranged downstream of the drying pump (48).

6. The nephelometric turbidimeter (10) of one of the preceding claims, wherein the drying cartridge (30) is provided with a U-shaped cartridge housing (37) with two substantially parallel legs (71, 72) and a cross portion (70) connecting the legs (71, 72), wherein an internal inlet opening (77) and an internal outlet opening (75) are provided at the end portions of the legs (71, 72) and wherein the Internal outlet opening (75) and/or the internal inlet opening (77) is/are an opening of a tube (74, 76) leading to the outside of the cartridge housing (37).

7. The nephelometric turbidimeter (10) of one of the preceding claims, wherein the drying body (32) is provided with an internal inlet opening (77) arranged in a low drying body portion and with an internal outlet opening (75) arranged in a high drying body portion.

8. The nephelometric turbidimeter (10) of one of the preceding claims, wherein a dust filter (35) is provided downstream of the drying body (32) and upstream of the cuvette chamber (16) and/or the optics chamber (27).

9. The nephelometric turbidimeter (10) of one of the preceding claims, wherein the drying apparatus comprises a separate buffer drying means (60) within a space fluidically connected to the cuvette chamber (16).

10. The nephelometric turbidimeter (10) of one of the preceding claims, wherein the cuvette chamber inlet opening (38) is closed by an Inlet membrane (40) which is permeable for air and impermeable for water.

11. The nephelometric turbidimeter (10) of one of the preceding claims, wherein the cuvette chamber outlet opening (42) is closed by an outlet membrane (44) which is permeable for air and impermeable for water.

12. The nephelometric turbidimeter (10) of one of the preceding claims, wherein the sample cuvette (12) is cylindrical, a measurement light source (18) is provided to generate a measurement beam (21) which is directed to the sample cuvette (12) axially through a window (19) at the bottom wall (80) of the chamber housing (14) and through the bottom wall (17) of the sample cuvette (12), and wherein the cuvette chamber inlet opening (38) is provided at the chamber housing bottom wall (80).

13. The nephelometric turbidimeter (10) of one of the preceding claims, wherein the air circulator (49) is a drying pump (48).

14. The nephelometric turbidimeter (10) of one of the preceding claims, wherein the air circulator (49) is an electric fan.

15. A method for controlling the humidity of venting air in a nephelometric turbidimeter (10) for measuring a turbidity of a liquid sample (13) in a transparent sample cuvette (12), the turbidimeter (10) according to claim 2 and comprising a control unit (50) for controlling the venting air humidity,
with the method step provided by the control unit (50):
continuously controlling the activity of the air circulator (49) dependent on the air humidity (h) detected by the humidity sensor (46) to regulate the air humidity to an air humidity set value (H).

16. The method for controlling the humidity of venting air in a nephelometric turbidimeter (10) of claim 15,
wherein the drying apparatus comprises a temperature sensor (47) being arranged in the venting path, with the method step provided by the control unit (50):
continuously controlling the activity of the air circulator (49) dependent on the air humidity (h) detected by the humidity sensor (46) and on the air temperature (t) detected by the temperature sensor (47) to regulate the relative air humidity to a relative air humidity set value (RH).

17. The method of claim 15 or 16 for controlling the humidity of venting air in a nephelometric turbidimeter (10),
wherein the turbidimeter (10) comprises a measurement beam source (18) provided to generate a measurement beam (21) which is directed to the sample cuvette (12) and with a turbidity sensor (22) outside the cuvette (12) for detecting light scattered by the liquid sample (13),
wherein the control unit (50) determines an air humidity set value (H; RH) with the following method steps:
stopping the air circulator (49),
periodically measuring the light intensity received by the turbidity sensor (22),
starting the air circulator (49),
periodically measuring the light intensity received by the turbidity sensor (22),
calculating the absolute air humidity set value (H) or the relative air humidity set value (RH) on the basis of the temporal course of the light intensity values detected by the turbidity sensor (22) during the air circulator (49) was stopped and was active.

18. The method of claim 15 or 16 for controlling the humidity of venting air in a nephelometric turbidimeter (10),
wherein the drying apparatus comprises an optical condensation sensor (52) which detects condensation on the outside surface (15) of the sample cuvette (12), and
wherein the control unit (50) determines the air humidity set value (S) with the following method steps:
stopping the air circulator (49),
measuring the condensation duration (d) until the condensation sensor (52) detects condensation at the cuvette surface (15),
measuring the air humidity (h) detected by the humidity sensor (46) and the air temperature (t) detected by the temperature sensor (47), and
calculating the absolute air humidity set value (H) or the relative air humidity set value (RH) on the basis of the condensation duration (d), the air temperature (t) and the air humidity (h).

## Patentansprüche

1. Nephelometrisches Trübungsmessgerät (10) zum Messen der Trübung einer Flüssigkeitsprobe (13) in einer transparenten Probenküvette (12), wobei das Trübungsmessgerät (10) eine Küvettenkammer (16) aufweist, die durch ein Küvettenkammergehäuse (14) zum Aufnehmen der Probenküvette (12) begrenzt ist, und
eine Trocknungsvorrichtung, welche aufweist:
eine Küvettenkammereinlassöffnung (38) zum Belüften der Küvettenkammer (16) und eine Küvettenkammerauslassöffnung (42) zum Entlüften der Küvettenkammer (16), wobei die Küvettenkammereinlassöffnung (38) und die Küvettenkammerauslassöffnung (42) außerhalb der Küvettenkammer durch einen Trocknungsweg miteinander verbunden sind;
einen Luftumwälzer (49) zum Umwälzen von Luft von der Auslassöffnung (42) zu der Einlassöffnung (38), und
einen Trocknungskörper (32), der durch eine Trocknungssubstanz (34), die ein Molekularsieb ist, gebildet ist, und in dem Trocknungspfad seriell zwischen der Auslassöffnung (42) und der Einlassöffnung (38) angeordnet ist,
wobei die Trocknungsvorrichtung eine den Trocknungskörper (32) enthaltende Wegwerftrocknungskartusche (30) aufweist, und
wobei die Trocknungskartusche mit einem Kartuschengehäuse (37) und mit fluidischen Kopplungselementen versehen ist (31, 33), welche ein schnelles Verbinden und Trennen des Kartuschengehäuses und des Trocknungskreises des Trübungsmessgeräts ermöglichen.

2. Nephelometrisches Trübungsmessgerät (10) nach Anspruch 1, wobei die Trocknungsvorrichtung einen Feuchtigkeitssensor (46) aufweist, der in dem Trocknungspfad angeordnet ist.

3. Nephelometrisches Trübungsmessgerät (10) nach einem der vorangehenden Ansprüche, wobei die Trocknungsvorrichtung mit einem an dem Trocknungsweg angeordneten Temperatursensor (47) versehen ist.

4. Nephelometrisches Trübungsmessgerät (10) nach einem der vorangehenden Ansprüche, wobei die Trocknungsvorrichtung einen optischen Kondensationsdetektor (52) aufweist, der Kondensation an der Außenfläche (15) der Probenküvette (12) detektiert.

5. Nephelometrisches Trübungsmessgerät (10) nach einem der vorangehenden Ansprüche, wobei das Küvettenkammergehäuse (14) von einem Optikkammergehäuse (26) umgeben ist, das eine Optikkammer (27) mit optischen Elementen (18, 20) umgibt, und wobei das Optikkammergehäuse (26) mit einer Optikkammereinlassöffnung (28) versehen ist, die fluidisch stromabwärts der Trocknungspumpe (48) angeordnet ist.

6. Nephelometrisches Trübungsmessgerät (10) nach einem der vorangehenden Ansprüche, wobei die Trocknungskartusche (30) mit einem U-förmigen Kartuschengehäuse (37) mit zwei im Wesentlichen parallelen Schenkeln (71, 72) und einem die Schenkel (71, 72) verbindenden Querteil (70) versehen ist, wobei eine innere Einlassöffnung (77) und eine innere Auslassöffnung (75) an den Endbereichen der Schenkel (71, 72) vorgesehen sind und wobei die innere Auslassöffnung (75) und/oder die innere Einlassöffnung (77) eine Öffnung eines Rohrs (74, 76) ist/sind, die zur Außenseite des Kartuschengehäuses (37) führt.

7. Nephelometrisches Trübungsmessgerät (10) nach einem der vorangehenden Ansprüche, wobei der Trocknungskörper (32) mit einer in einem tiefen Trocknungskörperbereich angeordneten inneren Einlassöffnung (77) und mit einer in einem hohen Trocknungskörperbereich angeordneten inneren Auslassöffnung (75) versehen ist.

8. Nephelometrisches Trübungsmessgerät (10) nach einem der vorangehenden Ansprüche, wobei ein Staubfilter (35) stromabwärts des Trocknungskörpers (32) und stromaufwärts der Küvettenkammer (16) und/oder der Optikkammer (27) vorgesehen ist.

9. Nephelometrisches Trübungsmessgerät (10) nach einem der vorangehenden Ansprüche, wobei die Trocknungsvorrichtung eine separate Puffertrocknungseinrichtung (60) in einem mit der Küvettenkammer (16) fluidisch verbundenen Raum aufweist.

10. Nephelometrisches Trübungsmessgerät (10) nach einem der vorangehenden Ansprüche, wobei die Küvettenkammereinlassöffnung (38) durch eine Einlassmembran (40) verschlossen ist, die luftdurchlässig und wasserundurchlässig ist.

11. Nephelometrisches Trübungsmessgerät (10) nach einem der vorangehenden Ansprüche, wobei die Küvettenkammerauslassöffnung (42) durch eine luftdurchlässige und wasserundurchlässige Auslassmembran (44) verschlossen ist.

12. Nephelometrisches Trübungsmessgerät (10) nach einem der vorangehenden Ansprüche, wobei die Probenküvette (12) zylindrisch ist, eine Messlichtquelle (18) zum Erzeugen eines Messstrahls (21) vorgesehen ist, der auf die Probenküvette (12) axial durch ein Fenster (19) in der Bodenwand (80) des Kammergehäuses (14) und durch die Bodenwand (17) der Probenküvette (12) gerichtet ist, und wobei die Küvettenkammereinlassöffnung (38) in der Kammergehäusebodenwand (80) vorgesehen ist.

13. Nephelometrisches Trübungsmessgerät (10) nach einem der vorangehenden Ansprüche, wobei der Luftumwälzer (49) eine Trocknungspumpe (48) ist.

14. Nephelometrisches Trübungsmessgerät (10) nach einem der vorangehenden Ansprüche, wobei der Luftumwälzer (49) ein elektrisches Gebläse ist.

15. Verfahren zur Regelung der Feuchtigkeit von Abluft in einem nephelometrischen Trübungsmessgerät (10) zur Messung einer Trübung einer Flüssigkeitsprobe (13) in einer transparenten Probenküvette (12), wobei das Trübungsmessgerät (10) ein Trübungsmessgerät nach Anspruch 2 ist und eine Steuereinheit (50) zum Steuern der Abluftfeuchtigkeit aufweist,
mit dem von der Steuereinheit (50) bereitgestellten Verfahrensschritt:
kontinuierliche Steuerung der Aktivität des Luftumwälzers (49) in Abhängigkeit von der durch den Feuchtigkeitssensor (46) detektierten Luftfeuchtigkeit (h), um die Luftfeuchtigkeit auf einen Luftfeuchtigkeit-Sollwert (H) zu regeln.

16. Verfahren zum Steuern der Feuchtigkeit von Abluft in einem nephelometrischen Trübungsmesser (10) nach Anspruch 15, wobei die Trocknungsvorrichtung einen Temperatursensor (47) aufweist, der in dem Lüftungspfad angeordnet ist, mit dem von der Steuereinheit (50) bereitgestellten Verfahrensschritt:
kontinuierliche Steuerung der Aktivität des Luftumwälzers (49) in Abhängigkeit von der von dem Feuchtigkeitssensor (46) detektierten Luftfeuchtigkeit (h) und der von dem Temperatursensor (47) detektierten Lufttemperatur (t), um die relative Luftfeuchtigkeit auf einen relativen Luftfeuchtigkeit-Sollwert (RH) zu regeln.

17. Verfahren nach Anspruch 15 oder 16 zum Steuern der Feuchtigkeit von Abluft in einem nephelometrischen Trübungsmessgerät (10),
wobei das Trübungsmessgerät (10) eine zur Erzeugung eines auf die Probenküvette (12) gerichteten Messstrahls (21) vorgesehene Messstrahlquelle (18) aufweist, und mit einem Trübungssensor (22) außerhalb der Küvette (12) zum Detektieren von von der Flüssigkeitsprobe (13) gestreutem Licht,
wobei die Steuereinheit (50) einen Luftfeuchtigkeit-Sollwert (H; RH) mit den folgenden Verfahrensschritten bestimmt:
Anhalten des Luftumwälzers (49),
periodisches Messen der von dem Trübungssensor (22) empfangenen Lichtintensität,
Starten des Luftumwälzers (49),
periodisches Messen der vom Trübungssensor (22) empfangenen Lichtintensität,
Berechnen des absoluten Luftfeuchtigkeit-Sollwerts (H) oder des relativen Luftfeuchtigkeit-Sollwerts (RH) auf der Basis des zeitlichen Verlaufs der vom Trübungssensor (22) detektierten Lichtintensitätswerte während der Luftumwälzer (49) angehalten und aktiv war.

18. Verfahren nach Anspruch 15 oder 16 zum Steuern der Feuchtigkeit von Abluft in einem nephelometrischen Trübungsmessgerät (10),
wobei die Trocknungsvorrichtung einen optischen Kondensationssensor (52) aufweist, der Kondensation an der Außenfläche (15) der Probenküvette (12) detektiert, und
wobei die Steuereinheit (50) den Luftfeuchtigkeit-Sollwert (S) mit folgenden Verfahrensschritten ermittelt:
Anhalten des Luftumwälzers (49),
Messen der Kondensationsdauer (d), bis der Kondensationssensor (52) Kondensation an der Küvettenoberfläche (15) detektiert,
Messen der von dem Feuchtigkeitssensor (46) detektierten Luftfeuchtigkeit (h) und der von dem Temperatursensor (47) detektierten Lufttemperatur (t), und
Berechnen des absoluten Luftfeuchtigkeit-Sollwerts (H) oder des relativen Luftfeuchtigkeit-Sollwerts (RH) auf der Basis der Kondensationsdauer (d), der Lufttemperatur (t) und der Luftfeuchtigkeit (h).

## Revendications

1. Turbidimètre néphélométrique (10) pour mesurer la turbidité d'un échantillon de liquide (13) dans une cuvette d'échantillon transparente (12), le turbidimètre (10) comprenant
une chambre de cuvette (16) définie par un carter (14) de chambre de cuvette pour le logement dudit cuvette d'échantillon (12), et
un dispositif de séchage avec:
une ouverture d'entrée (38) de la chambre de cuvette pour ventiler la chambre de cuvette (16) et une ouverture de sortie (42) de la chambre de cuvette pour vider la chambre de cuvette (16), ladite ouverture d'entrée (38) de la chambre de cuvette et ladite ouverture de sortie (42) de la chambre de cuvette étant connectées l'une à l'autre en dehors la chambre de cuvette par un trajet de séchage,
un circulateur d'air (49) pour circuler de l'air de l'ouverture de sortie (42) vers l'ouverture d'entrée (38), et
un corps de séchage (32) formé par une substance de séchage (34), laquelle est un tamis moléculaire, agencé de manière alignée dans le trajet de séchage entre l'ouverture de sortie (42) et l'ouverture d'entrée (38),
ledit dispositif de séchage comprenant une cartouche de séchage jetable (30) comprenant le corps de séchage (32) incluant le corps de séchage (32), et
la cartouche de séchage étant munie d'un logement de cartouche (37) et d'éléments de couplage fluidiques. (31, 33) permettant l'attachement et le détachement rapide du logement de cartouche au/du circuit de séchage du turbidimètre.

2. Turbidimètre néphélométrique (10) selon la revendication 1, dans lequel le dispositif de séchage est pourvu d'un capteur d'humidité (46) agencé dans le trajet de séchage.

3. Turbidimètre néphélométrique (10) selon l'une quelconque des revendications précédentes, dans lequel le dispositif de séchage est muni d'un capteur de température (47) agencé sur le trajet de séchage.

4. Turbidimètre néphélométrique (10) selon l'une quelconque des revendications précédentes, dans lequel le dispositif de séchage comporte un détecteur de condensation optique (52) détectant la condensation sur la surface extérieure (15) de la cuvette d'échantillon (12).

5. Turbidimètre néphélométrique (10) selon l'une quelconque des revendications précédentes, dans lequel le carter (14) de la chambre de la cuvette est entouré par un carter (26) de la chambre de l'optique renfermant une chambre de l'optique (27) comprenant des éléments optiques (18, 20) et le carter de la chambre de l'optique (26) étant pourvu d'une ouverture d'entrée de la chambre de l'optique (28) agencée de manière fluidique en aval de la pompe de séchage (48).

6. Turbidimètre néphélométrique (10) selon l'une quelconque des revendications précédentes, dans lequel la cartouche de séchage (30) est munie d'un carter de cartouche en forme de U (37) avec deux branches (71, 72) sensiblement parallèles et une partie transversale (70) reliant les branches (71, 72), une ouverture d'entrée internes (77) et une ouverture de sortie interne (75) étant prévues au niveau des parties d'extrémité des branches (71, 72), et l'ouverture de sortie interne (75) et/ou l'ouverture d'entrée interne (77) est/sont une ouverture d'un tube (74, 76) menant à l'extérieur du carter de cartouche (37).

7. Turbidimètre néphélométrique (10) selon l'une quelconque des revendications précédentes, dans lequel le corps de séchage (32) est pourvu d'une ouverture d'entrée interne (77) disposée dans une partie basse de corps à séchage et d'une ouverture de sortie interne (75) disposée dans une partie haute du corps de séchage.

8. Turbidimètre néphélométrique (10) selon l'une quelconque des revendications précédentes, dans lequel un filtre à poussière (35) est prévu en aval du corps de séchage (32) et en amont de la chambre de cuvette (16) et/ou de la chambre de l'optique (27).

9. Turbidimètre néphélométrique (10) selon l'une quelconque des revendications précédentes, dans lequel le dispositif de séchage comprend un moyen de séchage tampon (60) séparé à l'intérieur d'un espace connecté de manière fluidique à la chambre de cuvette (16).

10. Turbidimètre néphélométrique (10) selon l'une quelconque des revendications précédentes, dans lequel l'ouverture d'entrée (38) de la chambre de cuvette est fermée par une membrane d'entrée (40) qui est perméable à l'air et imperméable à l'eau.

11. Turbidimètre néphélométrique (10) selon l'une quelconque des revendications précédentes, dans lequel l'ouverture de sortie (42) de la chambre de cuvette est fermée par une membrane de sortie (44) qui est perméable à l'air et imperméable à l'eau.

12. Turbidimètre néphélométrique (10) selon l'une quelconque des revendications précédentes, dans lequel la cuvette d'échantillon (12) est cylindrique, une source de lumière de mesure (18) est prévue pour générer un faisceau de mesure (21) orienté vers la cuvette d'échantillon (12), axialement à travers une fenêtre (19) au niveau de la paroi inférieure (80) du carter de chambre (14) et à travers la paroi inférieure (17) de la cuvette d'échantillon (12), et l'ouverture d'entrée (38) de la chambre de cuvette étant formée dans la paroi inférieure (80) du carter de chambre (80).

13. Turbidimètre néphélométrique (10) selon l'une quelconque des revendications précédentes, dans lequel le circulateur d'air (49) est une pompe de séchage (48),

14. Turbidimètre néphélométrique (10) selon l'une quelconque des revendications précédentes, dans lequel le circulateur d'air (49) est un ventilateur électrique.

15. Procédé de réglage de l'humidité de l'air d'évacuation dans un turbidimètre néphélométrique (10) pour mesurer la turbidité d'un échantillon de liquide (13) dans une cuvette d'échantillon transparente (12), le turbidimètre (10) étant un turbidimètre selon la revendication 2 et comprenant
une unité de commande (50) pour régler l'humidité de l'air d'évacuation, avec l'étape de procédé fournie par l'unité de commande (50):
régler en permanence l'activité du circulateur d'air (49) en fonction de l'humidité de l'air (h) détecté par le capteur d'humidité (46) pour réguler l'humidité de l'air à une valeur de consigne d'humidité de l'air (H).

16. Procédé de réglage de l'humidité de l'air d'évacuation dans un turbidimètre néphélométrique (10) selon la revendication 15, dans lequel
le dispositif de séchage comprend un capteur de température (47) disposé sur le chemin de ventilation, avec l'étape de procédé fournie par l'unité de commande (50):
régler en permanence l'activité du circulateur d'air (49) en fonction de l'humidité de l'air (h) détectée par le capteur d'humidité (46) et de la température de l'air (t) détectée par le capteur de température (47) afin de réguler l'humidité relative de l'air à une valeur de consigne d'humidité relative de l'air (HR).

17. Procédé selon la revendication 15 ou 16 pour régler l'humidité de l'air d'évacuation dans un turbidimètre néphélométrique (10), dans lequel
le turbidimètre (10) comprend une source de faisceau de mesure (18) pour générer un faisceau de mesure (21) dirigé vers la cuvette d'échantillon (12) et avec un capteur de turbidité (22) à l'extérieur de la cuvette (12) pour détecter la lumière diffusée par l'échantillon de liquide (13),
l'unité de commande (50) déterminant une valeur de consigne d'humidité de l'air (H; RH) avec les étapes de procédé suivantes:
arrêter le circulateur d'air (49),
mesurer périodiquement l'intensité lumineuse reçue par le capteur de turbidité (22),
démarrer le circulateur d'air (49),
mesurer périodiquement l'intensité lumineuse reçue par le capteur de turbidité (22),
calculer la valeur de consigne d'humidité de l'air absolue (H) ou la valeur de consigne d'humidité de l'air relative (RH) selon l'évolution temporelle des valeurs d'intensité lumineuse détectées par le capteur de turbidité (22) pendant le temps le circulateur d'air (49) a été arrêtée ou actif.

18. Procédé selon la revendication 15 ou 16 pour régler l'humidité de l'air d'évacuation dans un turbidimètre néphélométrique (10), dans lequel
le dispositif de séchage comprend un capteur optique de condensation (52) détectant la condensation sur la surface extérieure (15) de la cuvette d'échantillon (12), et
dans lequel l'unité de commande (50) détermine la valeur de consigne d'humidité de l'air (S) avec les étapes de procédé suivantes:
arrêter le circulateur d'air (49),
mesurer la durée de condensation (d) jusqu'au moment le capteur de condensation (52) détecte la condensation sur la surface de la cuvette (15),
mesurer l'humidité de l'air (h) détectée par le capteur d'humidité (46) et la température de l'air (t) détectée par le capteur de température (47), et
calculer la valeur de consigne d'humidité de l'air (H) absolue ou la valeur de consigne d'humidité de l'air (RH) relative selon la durée de condensation (d), de la température de l'air (t) et l'humidité de l'air (h).
